# EUROPEAN PATENT APPLICATION

(11) **EP 3 342 278 A1**
(43) Date of publication of application: **04.07.2018**
(21) Application number: 17210887.0
(22) Date of filing: 28.12.2017
(51) Int. Cl.: A01G 24/44, A01G 9/02, A01G 9/029, A01G 24/28

(54) **KIT OF PARTS AND ASSEMBLY FOR DOMESTIC KEEPING OF PLANTS, IN PARTICULAR EDIBLE PLANTS SUCH AS HERB PLANTS**

(30) Priority: 29.12.2016 NL 2018099
(71) Applicant: De Grootscholten Beheer B.V., 2671 MC Naaldwijk (NL)
(72) Inventor: Grootscholten,, Johannes Petrus Wilhelmus, 2671 MC Naaldwijk (NL)
(74) Representative: Haan, Raimond

(57) **Abstract**

The invention relates to domestic keeping of plants, in particular edible plants, such as herb plants. The invention has as it at least one of its objects to provide an alternative for the domestic use of cut and potted fresh edible plants, in particular herbs. Thereto the invention provides a kit of parts, comprising: a plant and a device comprising at least one plant holder, wherein:
- the plant is a plug plant having a rooted plug; and
- the device is a domestic device, wherein the at least one plant holder is dimensioned to accommodate the rooted plug of the plug plant.

## Description

The present invention relates to domestic keeping of plants, in particular edible plants, such as herb plants.

Herbs are used in food preparation for flavouring food. For best flavour and most health benefits preferably fresh herbs are used for food preparation.

In restaurants where for food preparation herbs are daily used in large quantities, cut fresh herbs are generally used that are bought and used on the same day.

In domestic food preparation where herbs are not used daily and only in small quantities, the use of fresh herbs is associated with practical issues. It is not profitable for retailers to offer cut fresh herbs in small quantities. As a result retailers sell cut fresh herbs in quantities that are generally too large for a days use in domestic food preparation. After using a small quantity of the bought cut fresh herbs, domestic users of such cut fresh herbs are confronted with the problem of what to do with the remaining quantity. Many domestic users throw the remaining quantity away, what is a waste. Others try to keep the cut fresh herbs fresh for a couple of days in the refrigerator. This is generally a waste as well, since it is difficult to keep cut fresh herbs fresh over a couple of days in a domestic refrigerator.

As an alternative for cut fresh herbs, retailers offer potted fresh herb plants for domestic use. Although potted fresh herbs allow for a domestic user to keep herbs fresh for a longer period of time, the domestic user is confronted with the problem where to keep the potted herb plant. Most domestic users of potted fresh herbs keep the potted herb plant on the kitchen counter or window sill, what is generally considered as an inevitable waste of space. Furthermore, although the environmental conditions on the kitchen counter or window sill are such that a potted herb plant will remain fresh for some time, establishing plant growth is difficult. As a result, after some time the potted herb plant outlives its usefulness and is thrown away, what is generally considered a waste as well.

US 6381901 B1 is acknowledged as prior art, relative to which at least the features of the characterizing portion of claim 1 are novel. However, this prior art discloses a professional display assembly that is configured for display and offer for sale of a large number of plants to consumers in a shop, more in particular in retail grocery stores. The fully grown, mature living plants are offered for sale in a foil sleeve, and the living plant packages are to be accommodated in the display assembly, where the plants may be nourished to increase shelf life.

The present invention has as at least one of its objects to provide an alternative for the domestic use of cut and potted fresh edible plants, in particular herbs.

Thereto the present invention provides a kit of parts, comprising:
- a plant; and
- a device comprising at least one plant holder;
wherein:
- the plant is a plug plant having a rooted plug; and
- the device is a domestic device, wherein the at least one plant holder is dimensioned to accommodate the rooted plug of the plug plant.

It is important to recognize that plug plants are cutlings or seedlings which have been grown in trays or sheets of small cells, so-called propagation trays or sheets. Thus, the present invention is directed to a domestic device, e.g. to be placed on a kitchen counter, wherein small plants for consumption at home may be held. In normal practice, a seed production company sells seeds to a grower, which grows the seeds to seedlings. In a successive step, which is oftentimes performed by a further grower in a different company, the seedlings are grown to fully grown, mature plants. After being grown sufficiently large to maturity, the plants are offered for sale in a retail grocery store, where consumers may buy the plant or herb for consumption at home.

US 6381901 B1 provides a professional (store) solution for sale of a large number individual vegetable grown plants to a purchaser for consumption at home, wherein - contrary to sale of seedlings to growers - a live plant with a soil ball or clump is not suitable, since the soil ball is not easily maintained and can become dislodged. Thus, the prior art display assembly is configured to display fully grown plants, i.e. seedlings that have been grown to a full plant by one or more growers, and which are successively offered for sale in a retail grocery store for consumption at home. The display assembly of US 6381901 B1 is thus designed for commercial use, and is unsuitable to be used as a domestic device that is designed to be placed on a kitchen counter or a windowsill. Firstly, the display device is configured to accommodate full grown plants, which would be perceived as too big by most consumers to be placed on a regular kitchen counter. Secondly, the number of available plant accommodations is large (no less than 50), resulting in most of them being left open, while still occupying valuable space on the kitchen counter.

Contrary to selling full grown plant or herbs to consumers, the present invention provides a domestic device that is configured to house young and/or small or mid-size plug plants. They only occupy a minimal space, and may therefore be placed on a kitchen counter. Waste is significantly reduced, as home cooks will normally use only a small portion of a complete full grown plant in the limited time it can be maintained fresh at home. Instead of a large amount of a full grown plant being thrown away, the present invention provides the home cook with a small or mid-size plant. This also has another advantage, because the energy demanding second stage of growing the small or mid-size plant to a full grown plant may be omitted from the prior art plant production chain. This saves energy for growing the plants, and also reduces the amount of space required in logistics.

Plug plants are cutlings or seedlings which have been grown in trays or sheets of small cells, so-called propagation trays or sheets. The shape of each cell encourages the roots to bind the substrate into a single rooted plug which doesn't fall apart when removed from the tray. Optionally, the substrate is additionally held together by a binder substance or a net-like or teabag-like structure that (partly) encloses the substrate, wherein said net-like or teabag-like structure is configured to safeguard and maintain structural integrity of the rooted plug. When the roots have grown sufficiently the rooted plugs can be easily removed from the cells of the tray or sheet and be transplanted into larger pots for further growth. It is noted that in particular with herbs, a plug plant can comprise multiple herb plants that are grown on a single rooted plug. Using a net-like or teabag-like structure is configured to safeguard and maintain structural integrity of the rooted plug. This is a third, and perhaps even more important advantage that the domestic device according to the present invention provides relative to the professional device of US 6381901 B1. After all, the nature of domestic use imposes very different requirements than professional use. In a grocery retail store, the retailer will simply sell all the plants in the display device, and afterward have the whole display device cleaned at once by personnel. Contrary to fully emptying the displace device in a store, a home cook will regularly use and replace a specific plant or herb, depending on what dish is going to be prepared, while the other plants and herbs are still accommodated in the domestic device. The flexibility required in domestic use puts high demands on safeguarding a clean operation, because cleaning one specific plant holder is very cumbersome or may even not be possible when the other plant holders are still occupied. With a tea bag-like or net-like structure enveloping the substrate plug, a plant can be taken from the domestic device, after having been consumed or has become not as fresh anymore, and put in the waste, without leaving substrate plug residues in the plant holder of the domestic device.

A small or mid-size young plug plant of a herb is for instance transplanted into a larger pot for further growth into a known potted herb plant, that is subsequently sold by retailers for domestic use with the above described practical issues.

The kit of parts of the present invention allows for omitting the (trans)planting of a plug plant of a herb into a larger pot for further growth into a known potted herb plant. Instead of providing the domestic user with a fully grown potted herb plant, the present invention provides the domestic user with a young and small or mid-size plug plant, in particular a horticultural plug plant, which would under prior art practice be grown further into a fully grown mature and big plant by a second grower, but is instead offered for sale to end consumers for use in the present disclosure, and a domestic device comprising at least one plant holder is dimensioned to accommodate the rooted plug of the plug plant. Thus, instead of arranging a known potted herb plant on the kitchen counter, the domestic user places the domestic device with the at least one plant holder onto the kitchen counter or windowsill and arranges a selected plug plant into the holder, enabling easy and clean replacement.

The rooted plug of the plug plant of a herb according to the invention is generally of smaller dimensions than the substrate of the known potted herb plant. Preferably, the largest cross-sectional width of the rooted plug is comprised in the range of 1 cm to 8 cm. More preferably, for herb plants, the largest cross-sectional width of the rooted plug is comprised in the range of 3 cm to 6 cm. For a rooted plug with a square cross-sectional shape the largest length of the sides of the square is preferably in the range of 4 cm to 5 cm, more preferably about 4,5 cm, such that the largest cross-sectional width of the rooted plug, i.e. the length of the diagonal of the square cross-sectional shape, is preferably in the range of 5,6 cm to 7,1 cm, more preferably about 6,4 cm. This provides a particularly good balance between rooted plug size and fresh weight of the herb plant material.

A square with sides of 4,5 cm each comprises a surface area of 20,25 cm², which results in a small or mid-size plant compared to plants that are offered for sale in conventional prior art devices in stores. After all, conventional plant holders are typically round with a diameter of 10,5 or 12 cm. A 10,5 cm diameter results in a surface area of π multiplied by the radius of 5,25 cm squared, which is a total of 86,6 cm². A 12 cm diameter results in an even larger surface area of π * 6² = 113 cm² Thus, a size of the smallest conventional plant holder with a diameter of 10,5 cm already has a surface area that is more than four times larger than a preferred 4,5 cm square size according to the invention. This results in relatively small to mid-size plants relative to the size of plants that will grow in a 10,5 cm round surface area.

Although the relatively small rooted plug itself does not allow the plug plant of a herb to grow into a herb plant of the size of a known potted herb plant, the plug plant of a herb can be grown to have a size that is sufficient for domestic food preparation. And although the relatively small rooted plug of the plug plant of a herb is not particularly suitable for further growth of the plug plant, it is well suitable for keeping the plug plant of a herb fresh.

In view of the above, the fact that the rooted plug of the plug plant of a herb is generally of smaller dimensions than the substrate of the known potted herb plant, does not affect the usefulness of the plug plant of a herb for domestic food preparation. The plug plant of a herb can even be considered more adapted to the relatively small quantities of herb that are used in domestic food preparation than the known potted herb plants.

As a result of the relatively small dimensions of the rooted plug of the plug plant of a herb, the domestic device according to the present invention that accommodates the plug plant can have a smaller foot print than the potted herb plant. Alternatively, the domestic device can hold multiple plug plants or have additional functionality such as a water reservoir, while having a similar foot print as a known potted herb plant. The kit of parts according to the present invention thus wastes less space on the kitchen counter or windowsill, or at least provides more functionality or more plug plants thereby making the space taken by the domestic device less of a waste. In a preferred embodiment the at least one plant holder is dimensioned to accommodate the rooted plug of the plug plant such that the rooted plug of the plug plant closely fits the at least one plant holder.

After some time of use of the plug plant of a herb accommodated in a holder of the domestic device according to the invention, the plug plant is removed from the holder in which it is accommodated and is thrown away. Since a plug plant is designed for (trans)plantation without the rooted plug falling apart, the used plug plant of a herb can be easily removed from the holder in which it is accommodated and replaced with a new plug plant of a herb. The domestic device is thus reused, such that the throwing away of the used plug plant of a herb is less of a waste.

Furthermore, since a plug plant is designed for (trans)plantation without the rooted plug falling apart, replacement plug plants can be easily removed from a retail package and transplanted into a vacant holder of the domestic device without the rooted plug falling apart.

The retail package itself can be of a simple design. A simple foil sleeve or foil flow pack may be arranged around the plug plant for protection of the plant material during transportation and handling, and for preventing water evaporation. There is no need for a pot to prevent the plug from falling apart.

In a preferred embodiment the rooted plug comprises a substrate, preferably a substrate comprising coco peat. Alternatively or additionally, the substrate comprises at least one of wood fibre, rockwool, peat, and pressed peat. The substrate can also be made of a foam like material.

In the preferred embodiment wherein the rooted plug comprises a substrate the rooted plug is at least partly enclosed by a tea-bag or net-like structure. This allows for the use of substrate materials in the rooted plug that have a structure that makes it difficult for the roots to keep the substrate together, such as coco peat substrate. Additionally or alternatively, the rooted plug comprises a binder substance. In an advantageous embodiment the tea-bag or net-like structure is made of a biodegradable material.

In a further preferred embodiment of the kit of part according to the invention, the substrate is a coco peat substrate, in particular a coco peat substrate that is at least partly enclosed by a tea-bag or net-like structure. Alternatively, the substrate is one of wood fibre, rockwool, peat, and pressed peat. The substrate can also be made of a foam like material.

In a further preferred embodiment of the kit of parts according to the invention, the rooted plug and the plant holder are dimensioned such that the rooted plug closely fits in the plant holder. Preferably the plant holder is configured such that light is prevented from reaching at least the side surfaces of the rooted plug. Preferably the plant holder is configured such that the rooted plug is stably held in the plant holder. Preferably the plant holder is configured such that the plant holder prevents water from evaporating from the rooted plug via at least the side surfaces of the rooted plug. One or more of the above preferred configurations may advantageously be provided by a plant holder that closely fits the rooted plug when the rooted plug is accommodated in the plant holder. For providing the close-fit, the plant holder preferably comprises at least one side wall, wherein when the rooted plug is accommodated in the plant holder, the side surfaces of the rooted plug are covered by and in contact with the at least one side wall of the plant holder around the circumference of the rooted plug. Preferably, the inside of the plant holder where the rooted plug is accommodated has a shape and size that corresponds to the shape and size of the horticultural cell wherein the rooted plug was accommodated during the horticultural growth of the plug plant. By providing one or more of the above preferred configurations of the plant holder, it can advantageously be achieved that the accommodation of the rooted plug in the plant holder of the domestic device is similar to the accommodation of the rooted plug in the horticultural cell wherein the rooted plug was accommodated during the horticultural growth of the plug plant. Thus advantageously similar accommodation of the rooted plug of the plug plant is provided in the domestic environment without transporting the horticultural cell in which the rooted plug was accommodated during the horticultural growth of the plug plant from the horticultural environment to the domestic environment. Providing such similar accommodation in the domestic environment contributes to keeping the plug plant fresh despite the limited volume of the rooted plug.

In a further preferred embodiment of the kit of parts according to the invention, the domestic device comprises multiple plant holders. This allows for keeping multiple plug plants at the same time, for instance plug plants of different herbs. As discussed herein above, since the rooted plug of the plug plant of a herb is generally of smaller dimensions than the substrate of the known potted herb plant, the kit of parts according to the invention allows for multiple plug plants of a herb to be held within a smaller foot print than the total foot print of the same number of known potted herb plants.

In a further preferred embodiment, the domestic device comprises a maximum of six plant holders, preferably a maximum of five plant holders, more preferably a maximum of four plant holders, and most preferably a maximum of three plant holders. By limiting the number of plant holders, the domestic device may be provided in a relatively small size, that is suitable to be placed in house, especially on a kitchen counter or a windowsill.

In a further preferred embodiment of the kit of parts according to the invention, the domestic device comprises a water reservoir that is in fluid communication with the at least one holder for supplying water contained in the water reservoir to a rooted plug accommodated therein. Due to its relatively small volume, the rooted plug of the plug plant can only retain a limited amount of water. The water reservoir of the domestic device makes it possible to ensure that the plug plant has sufficient water at its disposal to stay alive. In a preferred embodiment thereof, the at least one plant holder is at least partly arranged in the water reservoir and comprises a wall with an opening via which opening the at least one plant holder is in fluid communication with the water reservoir. In an advantageous embodiment of the kit of parts according to the invention wherein the domestic device comprises a water reservoir, the domestic device comprises a supply opening that is fluid communication with the water reservoir for supplying the water reservoir with water. In a further advantageous embodiment of the kit of parts according to the invention wherein the domestic device comprises a water reservoir, the domestic device comprises a level gauge that is in fluid communication with the water reservoir.

In a further preferred embodiment of the kit of parts according to the invention, the domestic device comprises an enclosure enclosing the at least one plant holder, wherein the at least one plant holder has an opening dimensioned for insertion and removal of the rooted plug of the plug plant in the plant holder, wherein the opening is arranged in an outer wall of the enclosure. In an advantageous embodiment thereof, the at least one plant holder comprises at least one side wall that extends from the edge of the opening into the enclosure and that comprises a bottom wall opposite the opening. Preferably, the at least one plant holder is integrally formed with the enclosure. In an advantageous embodiment thereof in combination with the provision of a water reservoir, the enclosure encloses the at least one plant holder and the water reservoir. In a preferred embodiment thereof, the reservoir is embodied by an open top tank that is arranged in the enclosure.

In a further advantageous embodiment of the kit of parts according to the invention, the domestic device is made of a recyclable or biodegradable material. The domestic device or parts thereof can be made of a recyclable plastic or, for instance, be made of bamboo or stainless steel.

The present invention further relates to an assembly of the part of the kit of parts according to the invention as described herein above, an assembly comprising a plug plant having a rooted plug, and a domestic device, comprising at least one plant holder that is dimensioned to accommodate the rooted plug of the plug plant, wherein preferably, the rooted plug of the plug plant is accommodated in the at least one plant holder.

The present invention further relates to a system comprising a plug plant having a rooted plug, and a domestic device, comprising at least one plant holder that is dimensioned to accommodate the rooted plug of the plug plant. Preferably the system comprises a plurality of plug plants, possibly plug plants of different plant species, wherein the rooted plug of each plug plant is dimensioned to be accommodated in the at least one plant holder of the domestic device.

The accompanying drawings are used to illustrate a non-limitative preferred exemplary embodiment of the present invention. The above stated and other advantages, features and objectives of the invention will become more apparent, and the invention better understood, from the following detailed description when read in combination with the accompanying drawings, in which:
Figure 1 shows a preferred embodiment of the kit of parts according to the invention comprising a plug plant and a domestic device in perspective view;
Figure 2 schematically illustrates in perspective view the horticultural growth of a plug plant of the kit of parts of figure 1;
Figure 3 schematically illustrates in perspective view the domestic use of the kit of parts of figure 1;
Figure 4 shows in perspective view the kit of parts of figure 1 in assembled state;
Figure 5 shows a longitudinal section in perspective view of the kit of parts in assembled state of figure 4;
Figure 6 shows an exploded perspective view of the domestic device of the kit of parts of figure 5.

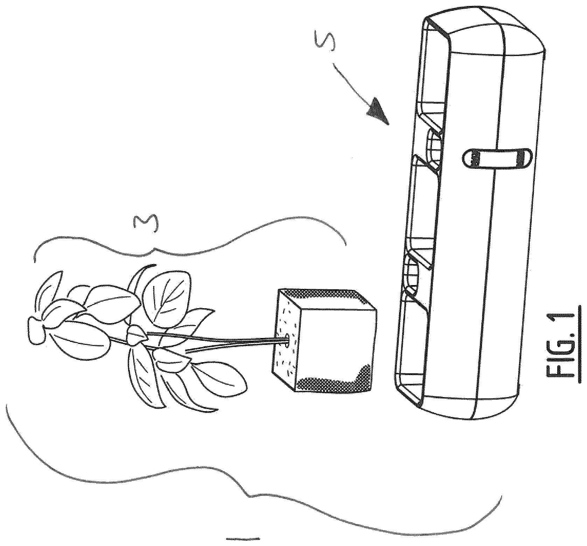

In figure 1 a preferred embodiment of a kit of parts according to the invention is shown. The kit of parts 1 comprises a horticultural grown plug plant 3, in particular a plug plant of a herb, and a domestic device 5.

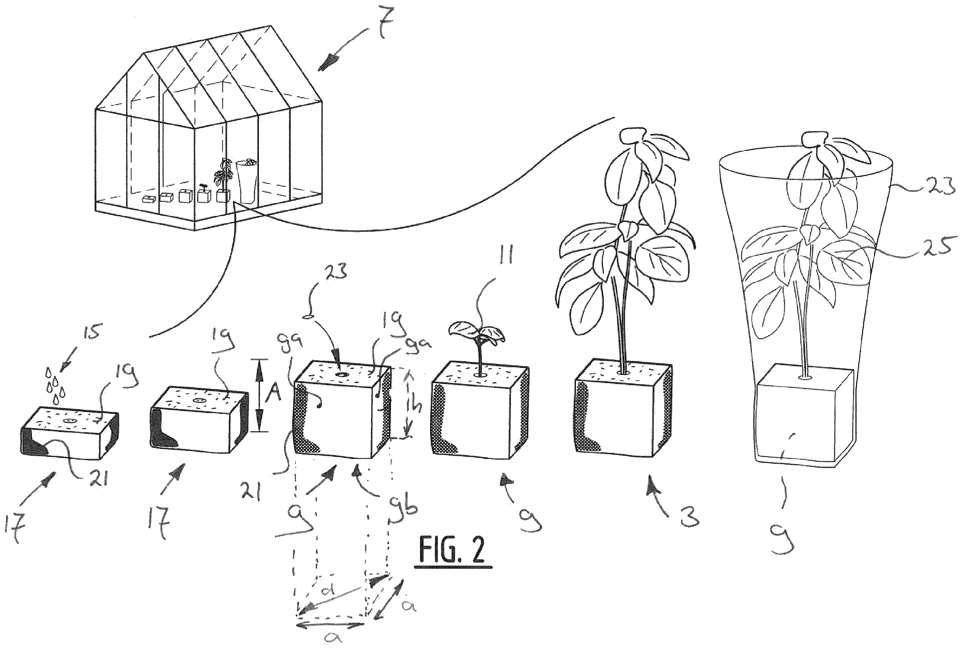

In figure 2 the horticultural growth of a plug plant 3 of the kit of parts 1 according to the invention in a horticultural greenhouse 7 is schematically shown. As shown, first a plug of substrate 9 is provided as a cell for germination and growth of a seedling 11 into a plug plant 3. The plug of substrate 9 is provided by adding water 15, optionally containing nutrition, to a so-called coco pellet 17, comprising compressed coco peat 19, and optionally compost, held together my means of a net-like structure 21, such that the pellet 17 expands, as indicated by means of arrow A, into a plug of substrate 9 comprising expanded coco peat 19 that is partly enclosed and thus held together by means of the net-like structure 21. In the shown embodiment the coco peat substrate 19 of the plug of substrate 9 is enclosed by the netlike-structure along its side surfaces 9a and bottom surface 9b. In the shown embodiment the plug of substrate 9 has a substantially square cross-section. In the shown preferred embodiment, the length a of the sides of the square cross-section is about 4,5 cm. The largest dimension in cross-section, i.e. the length d of the diagonal, is thus about 6,4 cm. The height h of the plug of substrate 9 is about 4,5 cm. Once the plug of substrate 9 is provided, a seed 23 of plant, in particular a herb plant, is planted in the plug of substrate 9, such that the seed 23 can germinate and grow into a seedling 11. For most herbs more than one seed is planted in the plug of substrate 9. Alternatively, in stead of a seed 23 a cutting is planted in the plug of substrate 9 and grown into a cutling in stead of a seedling. As shown the seedling 11 is subsequently further grown such that it matures into a plug plant 3, in particular a plug plant of a herb. During growth roots grow in the plug of substrate such that a rooted plug 9 results. During growth the plug of substrate 9 is accommodated in a tray cell of a propagation tray (not shown) wherein the plug of substrate 9 closely fits the tray cell.

Subsequently, in stead of being transplanted in a larger pot for further growth into a potted plant, the plug plant 3 is packaged to be sold for domestic use. In particular is shown that the plug plant 3 is wrapped in a sheet 23 of foil. In particular, the sheet 23 of foil partly encloses the rooted plug 9 and the plant material 25 of the plug plant for protecting the plug plant 3 during transport.

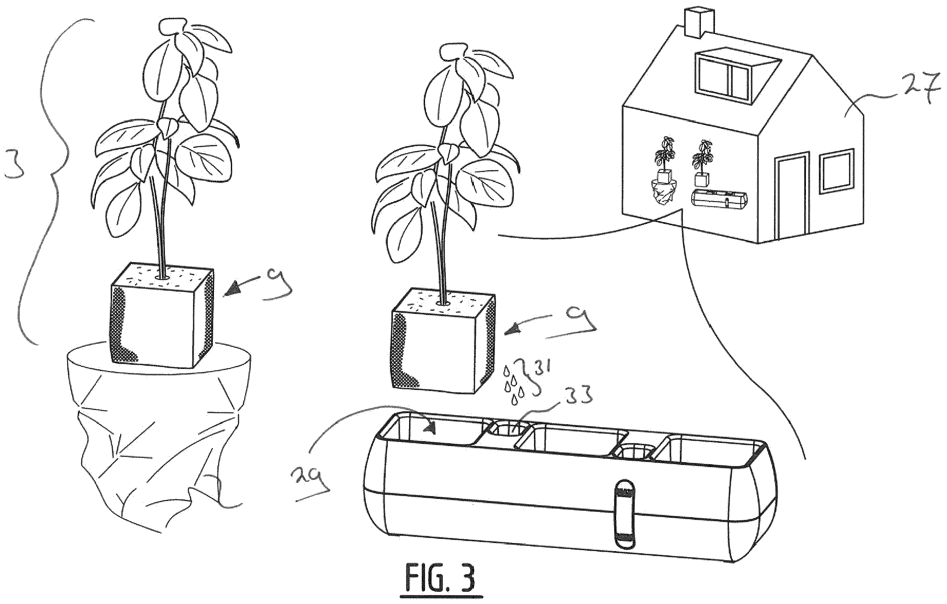

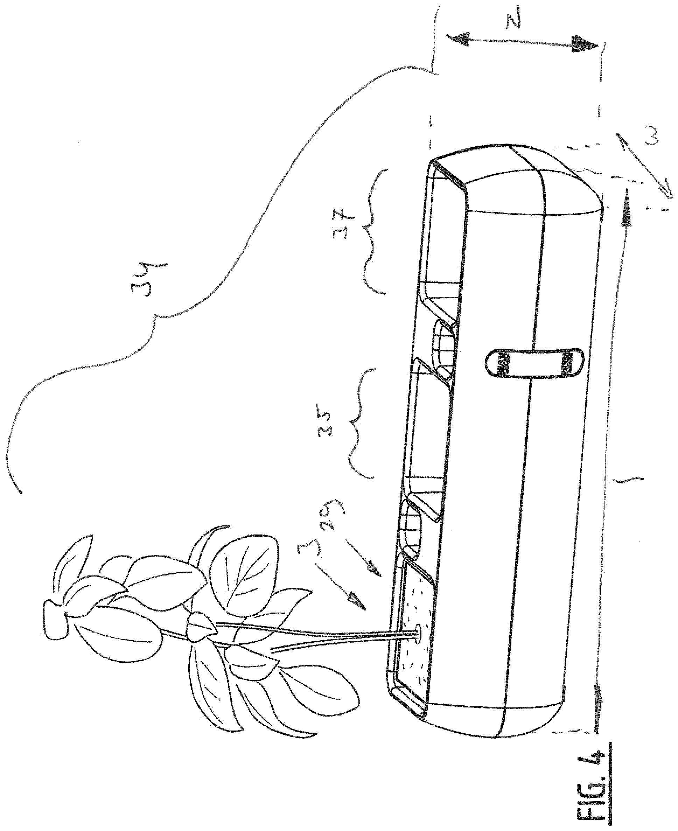

In figure 3 is schematically shown that after being sold to a domestic user for use in a domestic environment, illustrated by a house 27, the domestic user removes the package, i.e. the sheet 23 of foil, from the plug plant 3. Subsequently, the domestic user arranges the rooted plug 9 into a plant holder 29 of the domestic device 5 and puts water 31 into a watering opening 33 of the domestic device. The result is shown in figure 4, wherein the preferred embodiment of the kit of parts 1 of the present invention is shown in assembled state as an assembly 34. In the shown situation the domestic device 5 accommodates in one of its plant holders 29 one plug plant 3. The domestic device 5 has two additional plant holders 35, 37. Each of the additional plant holders 35, 37 can accommodate an additional plug plant 3. For instance, a plug plant of another herb species. The length 1 of the domestic device 5 is about 21 cm. The width w of the device is about 5,5 cm. The height z of the device is about 5,5 cm.

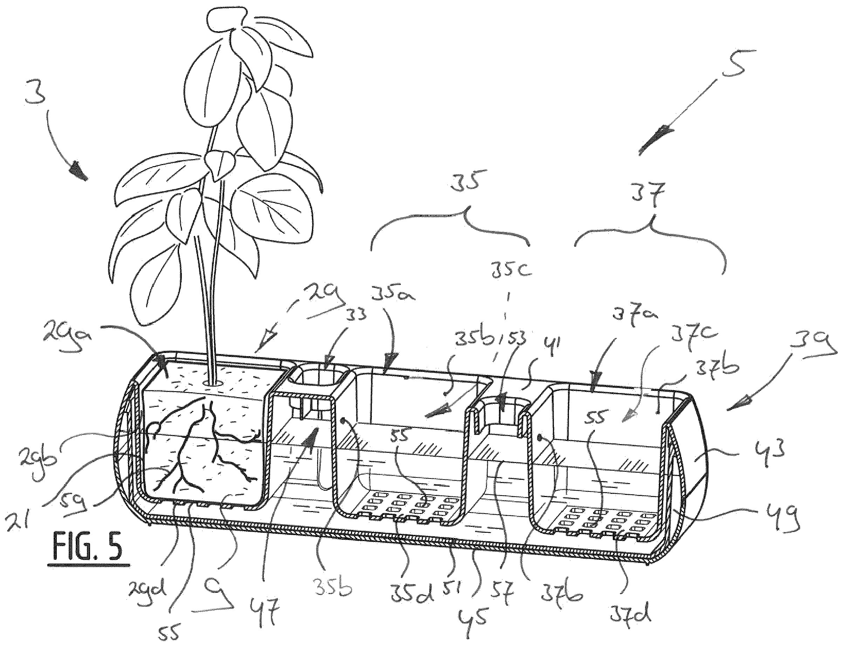

In figure 5 the kit of parts 1 in assembled state of figure 3, is shown in longitudinal section. As shown the domestic device 5 has multiple, in particular three, plant holders 29, 35, 37. One of the plant holders, i.e. plant holder 29, accommodates the rooted plug 9 of the plug plant 3. Thus, the plant holder 29 is dimensioned to accommodate the rooted plug 9 of the plug plant 3. In particular, as shown in figure 5, the plant holder 29 is dimensioned such that the plant holder 29 closely fits the rooted plug 9 of the plug plant 3. The side walls 29b of the plant holder 29 are in contact with and cover the side surfaces of the rooted plug 9, thereby preventing light to reach the side surfaces of the rooted plug and preventing water to evaporate from the rooted plug via the side surfaces thereof. The rooted plug 9 is stably held in the plant holder 29.

As shown in figure 5, the plant holders 29, 35, 37 each have an opening 29a, 35a, 37a, that is dimensioned for insertion and removal of the rooted plug 9 of the plug plant 3 in the plant holder 29, 35, 37. Each plant holder 29, 35, 37, has four side walls 29b, 35b, 37b, that extend downwards from the edge of the respective opening 29a, 35a, 37a. Opposite to the opening 29a, 35a, 37a each plant holder 29, 35, 37 has a bottom wall 29d, 35d, 37d. The side walls 29b, 35b, 37b and bottom wall 29d, 35d, 37d enclose an inner space 29c, 35c, 37c of the respective plant holder 29, 35, 37.

The domestic device 5 comprises an enclosure 39 enclosing the plant holders 29, 35, 37. The opening 29a, 35a, 37a of each plant holder 29, 35, 37 is arranged in an outer wall 41 of the enclosure 39. The outer wall 41 in which the openings 29a, 35a, 37a are arranged is a top outer wall of the enclosure. Together with a plurality of side outer walls 43 and a bottom outer wall 45, the enclosure 39 encloses an inner space 47 of the domestic device 5 in which the side walls 29b, 35b, 37b and bottom wall 29d, 35d, 37d of each plant holder 29, 35, 37 extend. Also arranged in the inner space 47 of the domestic device 5 is an open top tank 49. The bottom wall 51 of the open top tank 49 rests on the bottom outer wall 45 of the enclosure 39. The plant holders 29, 35, 37 extend into the open top tank 49.

In between each pair of neighbouring plant holders 29, 35; 35,37 a respective watering opening 33, 53 is arranged in the top outer wall 41 of the enclosure 39. Each watering opening 33, 53 debouches in the inner space 47 of the domestic device 5 in an open top tank 49, such that water that is put into the watering openings 33, 53, ends up in the open top tank 49. The open top tank 49 serves as a water reservoir for the plant holders 29, 35, 37. The bottom wall 29d, 35d, 37d, of the plant holders 29, 35, 37 has openings 55 arranged therein. Via the openings 55 the inner space 29c, 35c, 37c of each plant holder 29, 35, 37 is in fluid communication with the water reservoir. As long as the water level 57 of water 31 in the open top tank 49 is above the bottom wall 29d, 35d, 37d, of the plant holders 29, 35, 37, the plug plants 3 accommodated in the plant holders 29, 35, 37 are supplied with water 31 via the openings 55 in the bottom wall 29d, 35d, 37d. Via the openings 55, the water 31 enters the rooted plug 9 of the plug plant 3, such that the roots 59 of the plug plant 3 are supplied with water 31.

The net-like structure 21 encloses the sides and bottom of the rooted plug 9, such that the net-like structure holds the rooted plug 9 together while removing the rooted plug 9 from the plant holder 29, 35, 37.

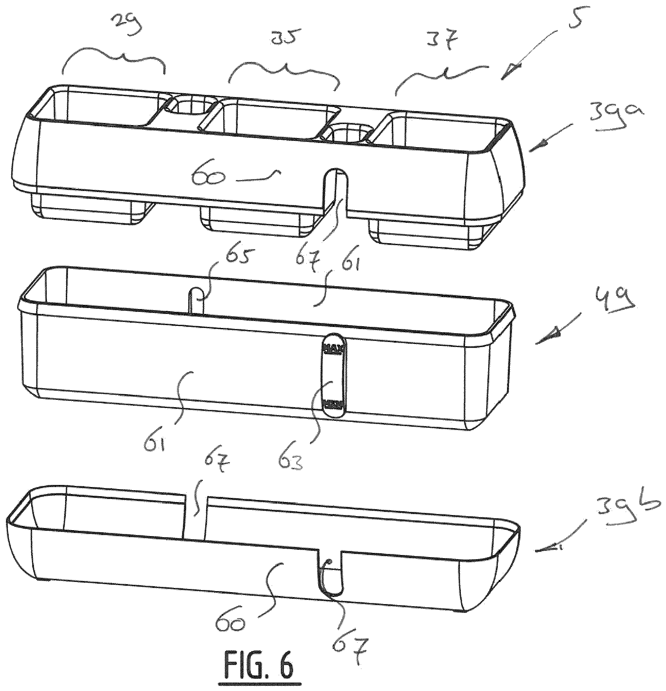

In figure 6, the domestic device 5 is shown in exploded view. As shown the enclosure 39 comprises a top part 39a and a bottom part 39b. As shown in figure 6, the plant holders 29, 35, 37 are integral part of the enclosure 39. The open top tank 49 is a separate part. The open top tank 49 has side walls 61 that extend upwards from the bottom wall 51 of the open top tank 49. As shown in figure 6, in two of the side walls 61 level gauges are provided embodied by gauge glasses 63, 65 that allow to look into the open top tank 49 and thus monitor the water level in the water reservoir. As shown in figure 6 the side walls 60 of the enclosure 39 are provided with openings 67 via which the gauge glasses 63, 65 of the open top tank 49 of the water reservoir can be monitored.

In the embodiment of the kit of parts shown in the drawings the rooted plug has a square cross-sectional shape. Alternatively, the rooted plug has a another cross-sectional shape, for instance a rectangular or circular shape. In that case the plant holder will in stead of a square cross-sectional shape have a rectangular or circular shape that corresponds to the cross-sectional shape of the rooted plug. In the embodiment of the kit of parts shown in the drawings the cross-sectional dimensions are substantially the same along the height of the rooted plug. Alternatively, the rooted plug is tapered, such that the cross-sectional dimensions increase along the height of the rooted plug from the bottom of the rooted plug towards the top.

In the embodiment of the kit of parts shown in the drawings for growing the plug plant a rooted plug is provided comprising a substrate held together by a netlike-structure as a separate cell for germination and growth of a seedling into a plug plant. Alternatively, the seedling is germinated and grown into a plug plant in trays of small cells, wherein the cells accommodate a substrate and the shape of each cell encourages the roots of the seedling to bind the substrate into a single plug which doesn't fall apart when removed from the tray. In the drawings the substrate comprises coco peat. Alternatively or additionally, the substrate may comprise at least one of wood fibre, rockwool, peat, and pressed peat. The substrate can also comprise a foam like material. In general the substrate can be any medium suitable for cultivation. According to a further alternative, the substrate in which the plug plant was grown is a gel substrate. In that case the rooted plug may no longer comprise a substrate and consist of roots.

In the embodiment of the kit of parts shown in the drawings, the plug plant is a plug plant of a herb. Alternatively, the plug plant is of another edible plant, such as lettuce.

In the embodiment of the kit of parts shown in the drawings, the water reservoir is provided by an open top tank that is separate from the enclosure. Alternatively, the water reservoir is integrated in the enclosure.

In the embodiment of the kit of parts shown in the drawings, the bottom walls of the plant holders has openings via which the inner space is in fluid communication with the water reservoir. Alternatively or additionally the side walls of the plant holder are provided with such openings.

In the embodiment of the kit of parts shown in the drawings, the domestic device has three plant holders. Alternatively, the domestic device has less plant holders, for instance one or two, or more plant holders, for instance three, four, five, six plant holders, or even more. In the embodiment of the kit of parts shown in the drawings, the domestic device has three plant holders that are arranged in a row. Alternatively the plant holders are arranged in another configuration than a row. For instance in a triangular configuration. In case the domestic device has more than three plant holders, the plant holders can also be arranged in a circular configuration or a grid-like configuration.

Although the principles of the invention have been set forth above with reference to specific embodiments, it must be understood that this description is given solely by way of example and not as limitation to the scope of protection, which is defined by the appended claims.

## Claims

1. Kit of parts (1), comprising:
- a plant; and
- a device comprising at least one plant holder (29);
**characterized in that**
- the plant is a plug plant (3) having a rooted plug (9); and
- the device is a domestic device (5), wherein the at least one plant holder is dimensioned to accommodate the rooted plug of the plug plant.

2. Kit of parts (1) according to claim 1, wherein the rooted plug is at least partly enclosed by a tea-bag or net-like structure (21) configured to safeguard and maintain structural integrity of the rooted plug.

3. Kit of parts (1) according to claim 1 or 2, wherein the plug plant is a horticultural plug plant, and preferably an edible plant, more preferably a herb.

4. Kit of parts (1) according to at least one of the foregoing claims, wherein the largest cross-sectional width of the rooted plug is comprised in the range of 1 cm to 8 cm, preferably in the range of 3 cm to 6 cm, and most preferably in the range of 4 cm to 5 cm.

5. Kit of parts (1) according to at least one of the foregoing claims, wherein the at least one plant holder is dimensioned to accommodate the rooted plug of the plug plant such that the rooted plug of the plug plant closely fits the at least one plant holder.

6. Kit of parts (1) according to at least one of the foregoing claims, wherein the rooted plug comprises at least one of:
- a binder substance; and
- a substrate (9), wherein the substrate preferably comprises a coco peat substrate (19).

7. Kit of parts (1) according to at least one of the foregoing claims, wherein the domestic device (5) comprises multiple plant holders (35, 37).

8. Kit of parts (1) according to claim 7, wherein the domestic device (5) comprises a maximum of six plant holders (29, 35, 37), preferably a maximum of five plant holders, more preferably a maximum of four plant holders, and most preferably a maximum of three plant holders.

9. Kit of parts (1) according to at least one of the foregoing claims, wherein the domestic device (5) comprises a water reservoir (49) that is in fluid communication with the at least one holder for supplying water contained in the water reservoir to a rooted plug (9) accommodated therein;
- wherein preferably the at least one plant holder (29, 35, 37) is at least partly arranged in the water reservoir and comprises a wall with an opening via which opening the at least one plant holder is in fluid communication with the water reservoir.

10. Kit of parts (1) according to claim 9, wherein the domestic device (5) comprises a supply opening that is fluid communication with the water reservoir for supplying the water reservoir with water.

11. Kit of parts (1) according to claim 9 or 10, wherein the domestic device (5) comprises a level gauge that is in fluid communication with the water reservoir.

12. Kit of parts (1) according to at least one of the foregoing claims, wherein the domestic device (5) comprises an enclosure enclosing the at least one plant holder (29, 35, 37), wherein the at least one plant holder has an opening dimensioned for insertion and removal of the rooted plug of the plug plant in the plant holder, wherein the opening is arranged in an outer wall of the enclosure;
- wherein preferably the at least one plant holder comprises at least one side wall that extends from the edge of the opening into the enclosure and that comprises a bottom wall opposite the opening; and
- wherein more preferably the at least one plant holder is integrally formed with the enclosure.

13. Kit of parts (1) according to any of claims 12 and claim 9, wherein the enclosure encloses the at least one plant holder and the water reservoir; and
- wherein preferably the reservoir is embodied by an open top tank that is arranged in the enclosure.

14. Assembly, comprising:
- a plug plant (3) having a rooted plug (9); and
- a domestic device (5), comprising at least one plant holder (29) that is dimensioned to accommodate the rooted plug (9) of the plug plant (3), wherein preferably, the rooted plug of the plug plant is accommodated in the at least one plant holder (29).

15. System, comprising:
- a plug plant (3) having a rooted plug (9); and
- a domestic device (5), comprising at least one plant holder (29) that is dimensioned to accommodate the rooted plug (9) of the plug plant (3);
wherein preferably the system comprises a plurality of plug plants, preferably plug plants of different plant species, wherein each the rooted plug of each plug plant is dimensioned to be accommodated in the at least one plant holder of the domestic device (5).
